# EUROPEAN PATENT SPECIFICATION

(11) **EP 0 716 815 B1**
(45) Date of publication and mention of the grant of the patent: **30.06.1999**
(21) Application number: 95203204.3
(22) Date of filing: 22.11.1995
(51) Int. Cl.: A23L 1/325, A23B 4/06, A23B 4/08

(54) **Method for bonding fish parts and device used with said method**
Verfahren zum Verkleben von Fischteilen und Vorrichtung dafür
Procédé pour lier des morceaux de poisson et appareillage utilisé avec ce procédé

(30) Priority: 22.11.1994 NL 9401943
(43) Date of publication of application: 19.06.1996
(73) Proprietor: H. van Wijnen B.V., 2921 LR Krimpen a/d Ijssel (NL)
(72) Inventor: de Snoo, Paul, NL-2861 CB Bergambacht (NL)
(74) Representative: Hooiveld, Arjen Jan Winfried

(56) References cited:
- EP-A- 0 336 463
- EP-A- 0 565 222
- WO-A-95/16364
- DE-C- 869 458
- FR-A- 2 137 873
- US-A- 1 936 814
- US-A- 4 464 404
- PATENT ABSTRACTS OF JAPAN vol. 009, no. 331 (C-321), 25 December 1985 & JP-A-60 160839 (NICHIRO GIYOGIYOU KK), 22 August 1985, & DATABASE WPI Week 8540 Derwent Publications Ltd., London, GB; AN 85-245680 & JP-A-60 160 839 (NICHIRO GYOGO KK) , 22 August 1985
- PATENT ABSTRACTS OF JAPAN vol. 940, no. 010 & JP-A-06 292554 (TAIYO KAGAKU CO LTD), 21 October 1994,

## Description

The invention relates to a method for bonding fish parts, wherein said fish parts are treated with a bonding agent preferably comprising a mixture of fibrinogen and thrombin.

This bonding agent is widely used in the meat-processing industry. Fibrinogen is a protein, which can be industrially recovered from the blood of beef cattle and which in combination with thrombin forms fibrin. The actual function of fibrin is to enable coagulation of blood, but the strong fibrin network has also appeared to be suitable for bonding chunks of meat together.

In a publication by the leading producer of the bonding agent, Harimex B.V., "FIBRI FACTS" - Vol. 1 - Issue 1 (August 1993), an example is given of the use of the bonding agent, whereby chunks of beef are treated with the bonding agent, placed in a cylindrical mould and compressed by means of an air-pressure operated press. The mould is then cooled for a predetermined period of time, during which time the bonding is formed, after which the beef having the shape thus obtained can be readily cut into exactly equal parts.

An important aspect of the said method is that all chunks of beef of a roughly corresponding quality can be used, and consequently also those chunks of meat that would normally be unsaleable because of their deviating shape and/or weight. It has now become possible to cut the desired quantities with great precision from the bonded chunks of meat having the shape thus obtained, because said shape will remain constant. More important even is the fact that it is now possible to cut exactly the same weight quantities having the same shape.

Said publication furthermore makes mention of the fact that the bonding agent can be used for all sorts of red meat and also for fish.

With fish the importance of "portion control", that is, being able to deliver parts which constantly have exactly the same dimensions and practically exactly the same weight may be even more important than for meat. Think for example of the catering industry, where it is extremely important in the preparation of ready-to-eat meals that in a single action a measured quantity of the desired species of fish can be put on a plate or on a roll, and that it is not necessary to check with every new plate or roll whether one or several slices must be taken from a stock of unequal slices in order to obtain an even distribution. Furthermore the catering company will desire a certain dimension of the product dependent on its use.

In practice it has become apparent, however, that with fish a number of problems present themselves, in particular with smoked fish, such as smoked salmon, for example. Generally an oil film is present on the outside of smoked fish, which makes it practically impossible to apply the bonding agent. Instead of smoking the fish the characteristic smoked taste may also be obtained by injecting the fish with smoke essences, a technique which is known per se, which makes it possible to provide the bonding agent after all.

However, when fish parts treated with the bonding agent are placed in a mould spaces are formed between the respective fish parts and between the fish parts and the mould. When slices are cut from such a block of fish said spaces can be clearly distinguished. Apart from the fact that this results in a less attractive slice, which moreover may disintegrate, the main drawback is that said "portion control" cannot be absolutely ensured in this manner.

It has become apparent that it is not possible to remove the spaces thus formed by compressing the block of fish parts, since the bonding agent will be pressed out from between the fish parts and hardly any bonding, if at all, is obtained in that case. The shape of the fish parts, which varies from straight to distinctly curved in longitudinal direction, furthermore makes it necessary that in order to remove all spaces from the block a pressure of such magnitude must be exerted, that the typical structure of the fish is largely or entirely lost as a result of the deformation caused thereby.

It is noted that the present invention is not restricted to the preferred bonding agent comprising a mixture of fibrinogen and thrombin. Good results are also obtained with other bonding agents, in particular with transglutaminase. In another preferred embodiment, sodium chloride is added to the transglutaminase.

The object of the invention is to provide a method which makes it possible to bond fish parts together with the bonding agent, whereby moreover a homogeneous product is obtained with every desired dimension of the eventual shape.

In order to accomplish that objective the method according to the invention comprises the step of placing the fish parts to be bonded in a mould after being treated with the bonding agent, wherein the fish parts are placed in the mould in such a manner that the original longitudinal direction of the individual fish from which said parts originate extend at least substantially parallel to each other and to the bottom surface of the mould, and wherein spaces formed between the respective fish parts and between the fish parts and the mould on placing the fish parts in the mould are filled with a mixture obtained by mixing part of the fish and treating the minced part with the bonding agent. In a preferred embodiment the present invention is applied for salmon. Salmon is fragile and has a typical structure. In another preferred embodiment the invention is applied for halibut. According to the invention the method preferably makes use of a mixture of fibrinogen and thrombin as the bonding agent.

Prior to this the fish may be injected with a brine solution and smoke essences, using a known technique, and then be dried briefly.

According to the invention the fish parts are placed in a mould in such a manner that they are as much as possible arranged in parallel relationship and in layers, so that a structure is obtained wherein the orientation of the fish parts is as much as possible the same. This is of importance for the appearance of the slices, which, for example with salmon, are cut parallel to the plane in which the fish parts have been placed in the mould.

French patent document no. 2,137,873 (Unilever) discloses a method for processing fish, for example salmon, wherein the fish is cut into fillets and the fillets are subsequently adhered using a bonding agent and pressing techniques, whereby the fillets are placed into a box-like mould. These pressing techniques particularly have the disadvantage of damaging the typical structure of the salmon as described earlier.

United States patent publication no. 4,464,404 (Ueno) describes a process for producing refrigerated minced flesh of fish, comprising adding (a) a sugar and/or a sugar alcohol and (b) lactalbumin and/or blood plasma to a dehydrated fish flesh, mincing the mixture and then refrigerating the minced product.

Japanese patent document no. 60160839 (Nigy) discloses a method of producing sashimi, wherein raw fish fillets are added to a binder and subsequently piled up stratiformly. These are then frozen rapidly while being pressed to form a block. The block is finally cut into sashimi pieces.

In practice it has become apparent that the individual spaces filled in accordance with the method are relatively small and that, partly because the same type of fish is used for the filler, the filled spaces hardly stand out and are certainly do not constitute an objectionable element in the natural structure of the fish which can be distinguished in a slice that has been cut.

More important even is the fact that with a block of fish bonded in accordance with the method it is possible to cut off slices of the same dimensions and the same weight to specification in a simple manner.

The fish parts to be used for the filler are subjected to the same pretreatment as the fish parts which are placed in the mould. Then said fish parts are minced and mixed with the bonding agent. In order to be ensured of an adequate bonding of the minced fish parts between themselves and between said fish parts and the fish parts in the mould, the method according to the invention comprises the step of mixing the minced fish with at least 5% bonding agent.

Said filling preferably takes place when the fish parts are being placed in the mould, so that bonding only takes place after the mould has been filled and not while the mould is still being filled.

After the mould has been filled it is placed in a cold store, where the eventual bonding takes place. Said placing in a cold store is done for sanitary (bacteriological) reasons.

The method according to the invention furthermore comprises the step of cooling a block of bonded fish parts, after said bonding has taken place, to a temperature which is lower than the temperature at which said bonding took place, so that further processing of the block is readily possible after said further cooling, said further processing for example comprising cutting or sawing the block into block segments.

The method according to the invention furthermore comprises the step or cutting block segments from a block, the cross-sectional dimensions of said block segments being such that slices having the desired dimensions can be cut therefrom.

The method according to the invention furthermore comprises the step of bonding the block segments together in a direction transversely to the desired section. The same bonding agent as used for bonding the fish parts is used for this purpose. In this manner a length of bonded fish block segments is obtained, from which slices having fixed dimensions and the desired weight can be cut at great speed with an industrial meat slicer.

When the block is thus divided into block segments, cutting remnants are produced, which also takes place at the beginning and at the end of a length from which slices of fish are cut. In order to be able to keep the price of the product as low as possible, it is of great importance to provide a possibility to reprocess said cutting remnants.

The method according to the invention comprises the steps of mincing the cutting remnants, in which the bonding agent is present, and mixing said cutting remnants with the minced fish parts used for the filler, after which the aggregate is mixed with the bonding agent.

According to the invention the amount of cutting remnants to be used in the filler must not exceed 30%. This limit is set in order to prevent that a very plastic mixture, which is difficult to cut, from being formed as a consequence of the reprocessing of the bonding agent, as has appeared to happen in practice, as a result of which the uniformity of the slices may easily be lost.

The invention furthermore provides moulds for producing blocks and for bonding block segments together to form a length of block segments.

The invention will be explained in more detail hereafter with reference the drawing, wherein:
Figure 1 shows a mould in which the method according to the invention may be used;
Figure 2 is a plan view of a mould which is partially filled with fish parts;
Figure 3 is a schematic perspective view of a block of fish parts formed in a mould; and
Figure 4 schematically shows a mould for bonding together a plurality of block segments.

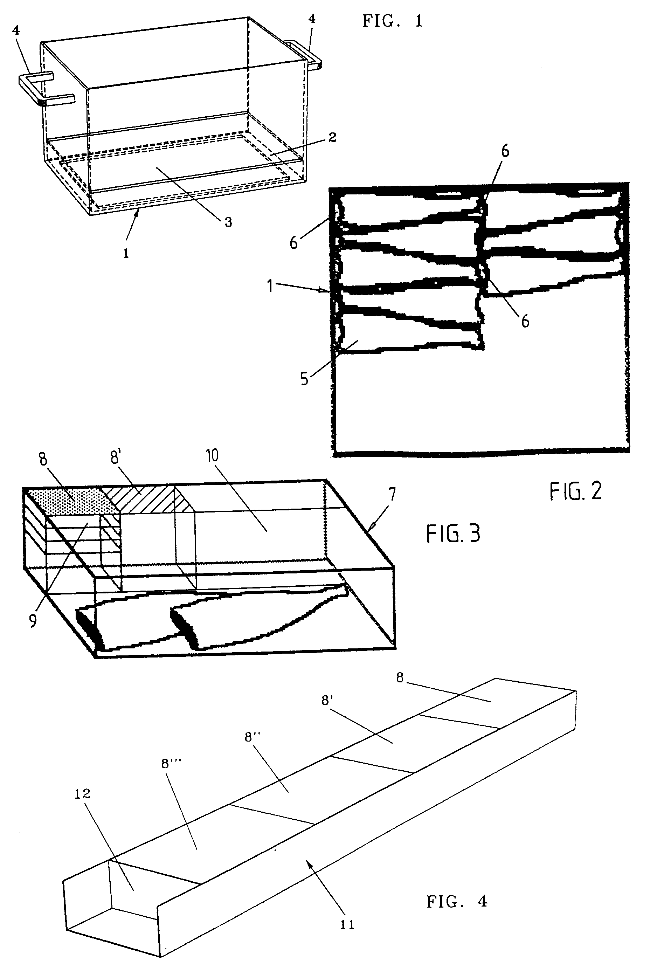

In Figure 1 numeral 1 indicates a mould in which a block of bonded-together fish parts may be formed in accordance with the method of the invention. In order to make it possible to remove a block that has been formed from the mould 1, said mould is provided with a loose bottom plate 3, which will be supported on the flanged edge 2 when the mould is being filled. Furthermore the mould is provided with grips 4, so that it can be readily moved.

Another embodiment (not shown) comprises the step of removing the block from the mould with compressed air, which may take place via one or more connections for compressed air on the bottom part. It is thereby possible to have the compressed air act directly on the block, but it is also possible to provide a movable plate within the mould, which plate abuts against the bottom side of the block that has been formed.

Figure 2 shows how the fish parts 5 are placed in the mould 1. Before the fish, in the present case for example being salmon, can be placed in the mould, it has first been subjected to the usual processing steps of cleaning, dividing into sides, removing bones, desinfecting, brining, maturing and drying. Then the bonding agent is sprinkled on the parts, after which said parts may be placed in the mould.

At the same time the filler for the interspaces 6 is formed, for which purpose parts of the fish are minced, with or without the addition of cutting remnants of previously bonded-together fish parts. Said mincing must take place slowly, since mincing at high speed may lead to discoloration of the salmon. The minced fish is mixed with the bonding agent and subsequently placed in the interspaces during the filling of the mould. The mixture is prepared in such an amount that it is possible for this amount to be processed within maximally 15 minutes.

The block thus formed is then placed in a cold store in order to prevent bacteriological contamination. At a temperature of about 0°C a it takes about 6 hours before the bonding process in a block of 32 x 48 x 30 cm has been completed. After the bonding process has been completed, further cooling of the block takes place at a lower temperature for some time, so that the block becomes sufficiently stiff for being cut into block segments.

A block of such dimensions has a weight of about 30 kg. It is not recommended to use larger blocks, since this will considerably increase the cooling time required for the blocks to become sufficiently stiff, which may be objectionable from a bacteriological point of view and which makes the blocks more difficult to handle and may lead to problems when cutting or sawing the block into block segments.

Figure 3 shows a block 7 that has been formed, from which block segments 8, 8', are cut or sawed. The block segments 8, 8', are cut from the block 7 in a direction perpendicularly to the plane in which the fish parts have been placed. From said block segments the eventual slices 9 are cut, parallel to the plane in which the fish parts have been placed. In this manner the eventual slice is cut in the direction which is usual with salmon and which clearly shows the characteristic salmon structure.

In order to be able to process the block segments in an optimum manner with an industrial meat slicer, a number of said block segments 8, 8', 8'', 8''', are placed one behind the other in an elongated mould 11, see Figure 4, and bonded together with the bonding agent in a similar manner as the fish parts, with this understanding that no filler is required here. At the open side of the mould a movable wall 12 is provided, which can be fixed in the mould in a manner not shown. With this wall the correct length of the mould can be adjusted.

In this manner an elongated block comprising for example 4 block segments may be formed, which, assuming that the height of the original block is 30 cm, will have an length of 120 cm.

Based on the block of the example of 32 x 48 x 30 cm, 16 block segments of 8 x 12 x 30 cm may be formed, from which 4 elongated blocks of 8 x 12 x 120 cm may in turn be formed.

In order to achieve a proper succession of block segments in the elongated mould of Figure 4, block segment 8 of Figure 3 might for example be arranged with the hatched side turned forward and with the side forming part of the side 10 in the original block turned upward, and to arrange block segment 8' behind said block segment 8, with the hatched side abutting against the rear side of block segment 8, and likewise with a part of the original side 10 turned upwards, etc.

## Claims

1. A method for bonding fish parts, wherein the fish parts to be bonded are placed in a mould after being treated with a bonding agent, characterized in that the fish parts are placed in the mould in such a manner that the original longitudinal direction of the individual fish from which said parts originate extend at least substantially parallel to each other and to the bottom surface of the mould, wherein spaces formed between the respective fish parts and between the fish parts and the mould on placing the fish parts in the mould are filled with a mixture obtained by mixing part of the fish and treating the minced part with the bonding agent.

2. A method according to claim 1, wherein a mixture of fibrinogen and thrombin is used as the bonding agent.

3. A method according to claim 1 or 2, wherein the bonding agent is added to the minced part of the fish, in such an amount that at least 5% of the minced part of the fish treated with the bonding agent consists of said bonding agent.

4. A method according to claim 1, 2 or 3, wherein the mixture of minced fish and bonding agent is prepared when the fish parts are being placed in the mould, whereby the mixture is prepared in such an amount that it is possible for this amount to be processed within a predetermined period of time.

5. A method according to claim 4, wherein said predetermined period of time is maximally 15 minutes.

6. A method according to any one of the preceding claims 1-5, wherein the block obtained after bonding is cut into block segments, after which the block segments thus obtained are bonded together in succession with the bonding agent.

7. A method according to claim 6, wherein before being cut into block segments, the original block is cooled to a temperature which is lower than the temperature at which said bonding of the fish parts takes place.

8. A method according to claim 6 or 7, wherein the block segments are cut from the block obtained after bonding in a direction perpendicularly to the bottom surface of the block, after which the block segments are bonded together in such a manner that segments of the upper surface and the bottom surface of the original block will be arranged in abutting relationship.

9. A method according to any one or several of the claims 6 - 8, wherein residual material formed during the processing of the blocks, block segments or bonded-together block segments is added to the minced part of the fish which is required for filling the spaces formed.

10. A method according to claim 9, wherein maximally 30% of the minced part of the fish required for filling the spaces formed consists of the residual material formed during the processing of the blocks, block segments or bonded-together block segments.

11. A device to be used with the method according to any one of the claims 1 - 10, wherein that said device comprises a rectangular mould, whereby the movable bottom of the mould can be moved upwards.

12. A device according to claim 11, wherein said device comprises a rectangular mould, whereby means are provided for generating an overpressure between the bottom of the mould and the block formed therein.

13. A device according to claim 11 or 12 to be used with the method according to any one of the claims 6 - 8, wherein said device comprises an elongated and rectangular mould, whereby on one short side means are provided for keeping the block segments placed in the mould in abutting relationship.

## Patentansprüche

1. Ein Verfahren zum Verlieben von Fischteilen, wobei die zu verklebenden Fischteile in eine Form gegeben werden, nachdem sie mit einem Bindemittel behandelt worden sind, dadurch gekennzeichnet, daß die Fischteile in solch einer Weise in die Form gegeben werden, daß die ursprüngliche Längsrichtung des einzelnen Fisches, von dem besagte Teile stammen, sich wenigstens im wesentlichen parallel zueinander und zur Bodenfläche der Form erstrecken, wobei Zwischenräume, die zwischen den entsprechenden Fischteilen und zwischen den Fischteilen und der Form beim Hineingeben der Fischteile in die Form gebildet werden, mit einer Mischung gefüllt werden, die erhalten wird durch Mischen eines Teiles des Fisches und Behandeln des zerkleinerten Teiles mit dem Bindemittel.

2. Ein Verfahren nach Anspruch 1, wobei eine Mischung aus Fibrinogen und Thrombin als das Bindemittel verwendet wird.

3. Ein Verfahren nach Anspruch 1 oder 2, wobei das Bindemittel zum zerkleinerten Teil des Fisches in solch einer Menge zugegeben wird, daß wenigstens 5 % des zerkleinerten Teiles des Fisches, der mit dem Bindemittel behandelt ist, aus besagtem Bindemittel bestehen.

4. Ein Verfahren nach Anspruch 1, 2 oder 3, wobei die Mischung aus zerkleinertem Fisch und Bindemittel hergestellt wird, wenn die Fischteile in die Form gegeben werden, wobei die Mischung in solch einer Menge hergestellt wird, daß es möglich ist, daß diese Menge in einem vorbestimmten Zeitraum verarbeitet werden kann.

5. Ein Verfahren nach Anspruch 4, wobei besagter vorbestimmter Zeitraum maximal 15 Minuten beträgt.

6. Ein Verfahren nach einem der vorangehenden Ansprüche 1 bis 5, wobei der nach dem Verkleben erhaltene Block in Blocksegmente geschnitten wird, woraufhin die so erhaltenen Blocksegmente nachfolgend mit dem Bindemittel miteinander verklebt werden.

7. Ein Verfahren nach Anspruch 6, wobei der ursprüngliche Block, bevor er in Blocksegmente geschnitten wird, auf eine Temperatur abgekühlt wird, die niedriger ist als die Temperatur, bei der besagtes Verlieben der Fischteile stattfindet.

8. Ein Verfahren nach Anspruch 6 oder 7, wobei die Blocksegmente aus dem nach dem Verkleben erhaltenen Block in einer Richtung senkrecht zur Bodenfläche des Blockes geschnitten werden, woraufhin die Blocksegmente in solch einer Weise miteinander verklebt werden, daß Segmente der oberen Oberfläche und der unteren Oberfläche des ursprünglichen Blockes aneinanderstoßend angeordnet werden.

9. Ein Verfahren nach einem der Ansprüche 6 bis 8, wobei Restmaterial, das während der Verarbeitung der Blöcke, Blocksegmente oder miteinander verliebten Blocksegmente gebildet wird, zum zerkleinerten Teil des Fisches zugegeben wird, der zum Füllen der gebildeten Zwischenräume erforderlich ist.

10. Ein Verfahren nach Anspruch 9, wobei maximal 30 % des zerkleinerten Teiles des Fisches, der zum Füllen der gebildeten Zwischenräume erforderlich ist, aus dem Restmaterial besteht, das während der Verarbeitung der Blöcke, Blocksegmente und miteinander verklebten Blocksegmente gebildet wird.

11. Eine Vorrichtung zur Verwendung beim Verfahren nach einem der Ansprüche 1 bis 10, wobei besagte Vorrichtung eine rechteckige Form umfaßt, wobei der bewegbare Boden der Form nach oben bewegt werden kann.

12. Eine Vorrichtung nach Anspruch 11, wobei besagte Vorrichtung eine rechteckige Form umfaßt, wobei Mittel zur Erzeugung eines Überdrucks zwischen dem Boden der Form und dem darin gebildeten Block vorgesehen sind.

13. Eine Vorrichtung nach einem der Ansprüche 11 oder 12 zur Verwendung beim Verfahren nach einem der Ansprüche 6 bis 8, wobei besagte Vorrichtung eine längliche und rechteckige Form umfaßt, wobei auf einer kurzen Seite Mittel vorgesehen sind, um die in die Form gegebenen Blocksegmente aneinanderstoßend zu halten.

## Revendications

1. Procédé pour lier des morceaux de poisson, dans lequel les morceaux de poisson qui doivent être liés sont placés dans un moule après avoir été traités au moyen d'un agent de liaison, caractérisé en ce que les morceaux de poisson sont placés dans le moule de telle manière que la direction longitudinale initiale du poisson individuel à partir duquel lesdits morceaux proviennent, s'étend au moins sensiblement parallèlement d'un morceau à l'autre et parallèlement à la surface de fond du moule, dans lequel procédé des espaces formés entre les morceaux de poisson respectifs et entre les morceaux de poisson et le moule lorsque l'on place les morceaux de poisson dans le moule sont remplis au moyen d'un mélange obtenu en malaxant une partie du poisson et en traitant la partie hâchée avec l'agent de liaison.

2. Procédé selon la revendication 1, dans lequel on utilise en tant qu'agent de liaison un mélange de fibrinogène et de thrombine.

3. Procédé selon la revendication 1 ou 2, dans lequel l'agent de liaison est ajouté à la partie hâchée du poisson dans une quantité telle qu'au moins 5 % de la partie hâchée du poisson qui est traitée avec l'agent de liaison est constituée dudit agent de liaison.

4. Procédé selon la revendication 1, 2 ou 3, dans lequel le mélange de poisson hâché et d'agent de liaison est préparé lorsque les morceaux de poisson viennent à être placés dans le moule, une quantité telle du mélange étant préparée qu'il est possible de traiter cette quantité à l'intérieur d'une période de temps prédéterminée.

5. Procédé selon la revendication 4, dans lequel la période prédeterminée de temps est au maximum de 15 minutes.

6. Procédé selon l'une quelconque des revendications 1 à 5, dans lequel le bloc obtenu après liaison est découpé en segments de bloc, après quoi les segments de bloc ainsi obtenus sont liés ensemble en succession avec l'agent de liaison.

7. Procédé selon la revendication 6, dans lequel avant d'être découpé en segments de bloc, le bloc initial est refroidi jusqu'à une température qui est inférieure à la température à laquelle se produit la liaison des morceaux de poisson.

8. Procédé selon la revendication 6 ou 7, dans lequel les segments de bloc sont découpés à partir du bloc obtenu après liaison dans une direction perpendiculaire à la surface de fond du bloc, après quoi les segments de bloc sont reliés ensemble de telle manière que les segments de la surface supérieure et de la surface de base du bloc initial seront disposés en butée l'un contre l'autre.

9. Procédé selon l'une quelconque ou plusieurs des revendications 6 à 8, dans lequel du matériau résiduel formé lors du traitement des blocs, des segments de bloc ou des segments de bloc liés entre eux, est ajouté à la partie hâchée de poisson qui est requise pour remplir les espaces formés.

10. Procédé selon la revendication 9, dans lequel 30 % au plus de partie hâchée du poisson requise pour remplir les espaces formés sont constitués du matériau résiduel formé lors du traitement des blocs, des segments de bloc ou des segments de bloc liés entre eux.

11. Dispositif destiné à être utilisé avec le procédé conforme à l'une quelconque des revendications 1 à 10, dans lequel ledit dispositif comprend un moule rectangulaire, où le fond mobile du moule peut être déplacé vers le haut.

12. Dispositif selon la revendication 11, dans lequel ledit dispositif comprend un moule rectangulaire, où des moyens sont prévus pour engendrer une surpression entre le fond du moule et le bloc qui y est formé.

13. Dispositif selon la revendication 11 ou 12, destiné à être utilisé avec le procédé conforme à l'une quelconque des revendications 6 à 8, dans lequel ledit dispositif comprend un moule de forme allongée et rectangulaire, où sur l'un des petits côtés sont prévus des moyens pour maintenir les segments de bloc placés dans le moule en relation mutuelle de butée.
